# EUROPEAN PATENT APPLICATION

(11) **EP 3 958 118 A1**
(43) Date of publication of application: **23.02.2022**
(21) Application number: 20020379.2
(22) Date of filing: 21.08.2020
(51) Int. Cl.: G06F 9/445

(54) **DATA LOADING DEVICE FOR AIRCRAFTS**

(71) Applicant: MBS Electronic Systems GmbH, 82319 Starnberg (DE)
(72) Inventor: The designation of the inventor has not yet been filed
(74) Representative: Blum, Heike

(57) **Abstract**

**Summary**

The invention relates to a data loading device (1) and a corresponding data loading method for loading software into aircraft systems (2), wherein the data loading device (1) comprises a Interface compatible with compact flash (3), a card (4) providing conversion between compact flash and PCMCIA ATA, a flash memory device (5), a controller (6) and a serial connection (7) to host computer (8).

The flash memory device (5) can be loaded with data from the host computer (8) via the connection (7) and the controller (6). After the data has been loaded into the flash memory device (5), the data loading device (1) has a control mechanism (9) which allows the external data terminal of an aircraft system (2) access the flash memory device (5) when the data loading device (1) is inserted into the external data terminal (2), either directly or indirectly via the converter card (4). Through this process data can be securely loaded from the host computer (8) to the aircraft system (2).

## Description

The invention relates to a data loading device and a corresponding data loading method for loading software into aircraft and other vehicle and machine systems.

The number of applications and electronic components developed to control aircraft systems and flight functions has grown exponentially in just the last decade. Older Boeing 737s and Airbus A320s airliner were loaded with, maybe 30 pieces of software that changed fairly infrequently. They could be kept track of on a sheet of paper.

With the introduction of the Boeing 777 in the mid-1990s, the number increased to 120+ pieces of software. Fast forward to today's newest aircraft like the Airbus 350XWB, and not only has the quantity of software jumped to as high as 500 units, but those 500 applications of software are not loaded to just 500 locations, they're being loaded onto 800 to 900 locations (ref. IATA 'Best Practices for Loadable Software Management and Configuration Control', https://www.iata.org/conten-tassets/d1ca23709ff94de6a30e8837952a57bf/loadable-software-management-configuration-control.pdf, downloaded on 25.06.2020).

Many applications and electronic components that execute a program or operating system stored on-board in the electronic component in order to fulfil their respective functions are installed in a modern aircraft or trains. These electronic components may be flight or security control systems, radio and radar systems, for example. Furthermore, aircraft are installed with electronic components which, in order to fulfil their function in the aircraft, have to access a large amount of data in addition to a program, for example navigation systems which regularly have to be updated with the latest information regarding changes to radio beacons, airports, etc.

The majority of the electronic components therefore undergo at least one software update and/or data update during the service life thereof. Components which access software that uses information from databases are updated significantly more frequently.

Since, for updating the electronic components, it is not expedient for said components to be individually removed from the aircraft and for the appropriate changes or updates to be made in a workshop, these components can generally be provided with updated or improved programs and/or updated database information when they are still installed.

The electronic components of an aircraft are generally connected to a data bus, which can be used for loading the changes, so that the electronic components need to be accessed from outside only at one point or a few points on the aircraft. The updates or changes to software or data for electronic components of an aircraft are made available to the operator of the aircraft or of a fleet of aircraft by the aircraft manufacturer, the manufacturers of the individual electronic components or others as software packets or data packets. They are compiled in each case for a certain aircraft as a data configuration. These are also referred to as field loadable software (FLS).

Software management has clearly become challenging, especially since many airlines are still using archaic distribution methods. Imagine piles of floppy disks, hours spent loading software parts into multiple Line Replaceable Units (LRUs) on multiple aircraft in multiple locations, while still being able to keep track of all aircraft configurations and aircraft equipment loaded.

Airline facilities impose personnel security by requiring each individual to have credentials such as a corporate identification card (or badge) in order to enter areas that expose software to the risk of being altered or corrupted. However, the rise of electronic distribution and storage has necessitated new security methods.

The downside of aircraft software is that when things do not go correctly the aircraft simply sits on the ground. With such experiences becoming more commonplace in the industry, the need for established software management and configuration control processes is no longer an option, it is a necessity.

Many aircraft systems comprise hardware and software components. A loadable system is different because it consists of loadable software parts and loadable (hardware) LRUs that are independently configured at the airplane level.

Software can be transferred into software - loadable LRU using equipment which is permanently installed on board loader, a portable on-board loader or supplier automated test equipment. A few systems can be loaded on-board by inserting the medium into the LRU itself. The appropriate equipment used to load an LRU depends on the system. For all loadable systems, the software parts installed as part of the system are identified electronically; a placard is not required on an LRU to identify what software parts are loaded in that LRU.

The correct functionality of aircraft systems is dependent upon the fidelity of installed Loadable Software Parts (LSP). These parts typically contain integrity checks. However, such checks do not themselves protect against unintended parties being able to create software that validates against a particular integrity check method and allow it to be installed in the aircraft. One needs to authenticate that the software came from a trusted source in order to trust its integrity. Digital signatures provide the capability to verify aircraft software part integrity and authenticity independent of the part distribution mechanism.

Software integrity and authenticity is achieved by the use of digital signatures attached to a file that is distributed with the software part. A software part with attached security file is called a signed software part. The signature(s) of a signed software part can be checked at various points, including (According To Arinc 835, Guidance For Security Of Loadable Software Parts Using Digital Signatures)):
- Distribution: Signature(s) can be verified by any receiver of a software part to authenticate that it came from a valid source.
- Storage: Signature(s) can be verified during or after a software storage process to ensure software was not corrupted.
- Data Loader: Signature(s) can be verified prior to data loading to assure the software was not corrupted during distribution to the data loader.

It is intended, within the aircraft industry, that in order for an aircraft to maintain Continued Airworthiness, software signatures must be authenticated immediately prior to software loading.

This requirement can be easily met for many standard data loading techniques which involve the direct connection of the Portable Data Loaders (PDL) to the aircraft systems via standard aircraft interfaces. However, there are many aircraft systems, for which software is loaded via portable memory devices such as Compact Flash and PCMCIA ATA Cards. The loading of software parts with such memory cards will, in the future, no longer be allowed, since it would not be possible to be authenticated immediately prior to loading.

This creates a serious problem for airlines and the purpose of the invention is to solve this problem for aircraft systems loaded via Compact Flash or PCMCIA ATA memory Cards. Such a device developed by Lufthansa Technik is published in EP 2 959 377 B1. With the LHT concept, the switching between Hosts is achieved by using a physical switch to control which Host has access to the Memory Device. However, using a physical swich to switch between hosts requires a action, which may cause security and logistic issues.

It is therefore the objective of the invention to provide a data loading device and a process to operate such devices for aircraft, which provide a high level of software integrity and authenticity when uploading to on-board aircraft, vehicle or machine systems, and optimises the management of field loadable software.

The solution to the objective is provided by the features of the independent claims 1, 7 and 9.

The invention enables the security benefits of Public Key Infrastructure (PKI) to be applied to data loading of digitally signed software part using Compact Flash and PCMCIA ATA where the unit to be loaded does not include the required digital signature checking functionality. A Compact Flash or PCMCIA ATA Emulator combined with a data loading device containing digital signature checking functionality allows validation of the Authenticity and Integrity of a signed software part at the point of data loading.

This invention removes the security and logistic issues of handling physical media as well as avoiding the upgrade of aircraft systems, with the associated high certification costs.

In addition, the used emulators allow separate hosts to access a memory device on a common data bus, subject to following an agreed protocol. Theoretically, both the Data Loader and the System Computer could access the Compact Flash or PCMCIA Memory simultaneously, but both of these devices follow an agreed protocol, set out in the appropriate recognised standards (e.g. USB On-The-Go (OTG)), which prevent such occurrences.

With the introduction of so-called e-enabled aircraft data loading security became part of the aircraft design and certification. Standards such DO-355/ED-204, ARINC 835-1, and ATA spec 42 have been produced that contain specific guidance on software security for those aircraft types, but these are not used in all cases, particularly for non e-enabled aircraft.

For a secure data loading of non e-enabled aircraft recommendations referencing out to these industry standards. These recommendations can be implemented relatively easily to Ground Support Equipment (GSE) such as Portable Data Loaders (PDL) and Maintenance Laptops, however Airborne Data Loaders (ADL) and LRUs containing integrated software loading functions, that are loaded via physical media (Compact Flash, PCMCIA ATA) are very costly to update due to certification costs. It is the achievement of this invention to provide a device, which enables the use of PDL, compliant to the above recommendations, to data load LRUs that are traditionally loaded with Compact Flash or PCMCIA ATA memory Cards, without the need to modify the Aircraft system.

In order to meet the security requirements specified in ARINC 835 and the air-framers, the Signatures of the Loadable Software Parts (LSP) are checked immediately before loading them into the Aircraft Systems. This was not possible using the traditional method where Compact Flash (CF) and PCMCIA ATA Cards were configured with the LSP software and later transported to the aircraft for loading into the system.

The invention involves the use of devices with the properties:
- Physically connect to Portable Data Loader (PDL) or Computer
- Provide temporary storage of the LSP data
- Be able to connect to the Aircraft System in the same manner as the CF or PCMCIA ATA Cards
- To be such that the Aircraft System responds to them in the same manner as it does for standard CF and PCMCIA ATA Cards

Such devices are referred to as CF or PCMCIA ATA Emulator Cards. With the use of these devices, the PDL or Computer can:
- Acquire Loadable Software Parts (LSP) to be loaded and stored locally
- Check the Signatures of the LSP prior to loading
- Transfer the LSP to the CF or PCMCIA ATA Emulator Cards
- The Emulator Card is inserted into the aircraft system in the normal way
- The Aircraft System reports a status as to whether the load was successful or otherwise
- The operator inputs the result into the PDL or Computer
- The status can later be automatically or manually relayed back to the Airline via Ethernet, Cellular, or Wi-Fi worldwide

However since operators of other complex mobile and static systems like trains, ships and industrial applications have similar constraints in updating various on-board computer systems with an updated software, the invention is applicable on those systems as well.

The invention is explained in the following based on preferred embodiments with reference to the accompanying drawings, in which:
- Fig. 1a: shows a sketch of a data-loading device connected via a conversion card to the system,
- Fig. 1b: shows a sketch of a data-loading device connected directly to the system,
- Fig. 2a: shows a sketch of a data-loading device featuring a host sided buffer,
- Fig. 2b: shows a sketch of a data-loading device featuring two buffer and
- Fig. 3: shows a chart for end-to-end distribution of software and data.

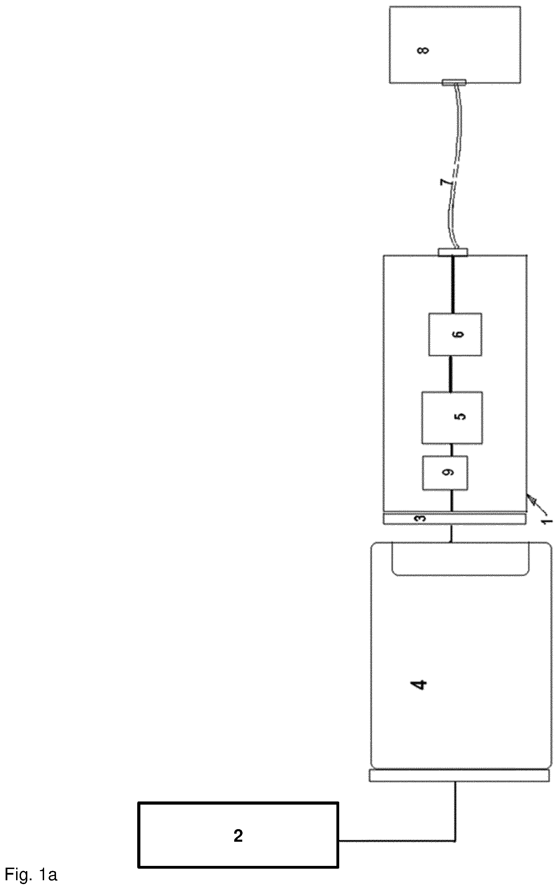

In the embodiment according to **Fig 1a** the invention relates to a data loading device 1 and a corresponding data loading method for loading software into aircraft systems 2, wherein the data loading device 1 comprises an interface 3 compatible with compact flash, a conversion card 4 providing conversion between compact flash and PCMCIA ATA, a flash memory device 5, a controller 6 and a serial connection 7 to host computer 8.

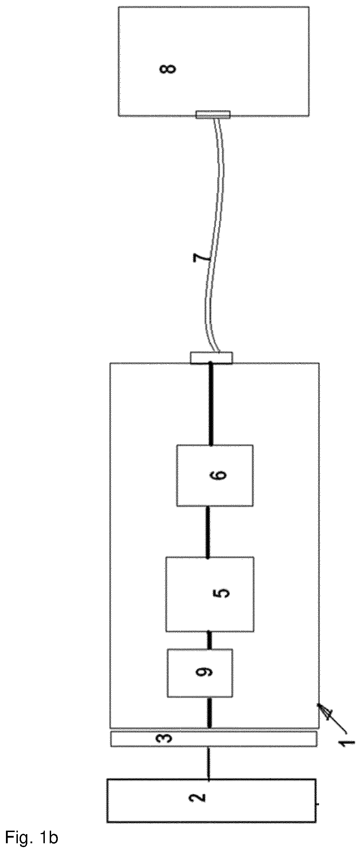

The flash memory device 5 can be loaded with data from the host computer 8 via the serial connection 7 and the controller 6. After the data has been loaded into the flash memory device 5, the data loading device 1 has a control mechanism 9 which allows the external data terminal of an aircraft system 2 access the flash memory device 5 when the data loading device 1 is inserted into the external data terminal 2, either directly as shown in **Fig. 1b** or indirectly via the converter card 4 as outlined in **Fig. 1a****.** Through this process data can be securely loaded from the host computer 8 to the aircraft system 2.

The flash memory mass storage card 5 can be a CompactFlash (CF) card. Flash memory mass storage devices are often used in portable electronic devices. A flash memory card is solid-state, hence it is less affected by shock than a spinning disk. Typically CF cards are used directly in a PC Card slot with a plug adapter, used as an ATA (IDE) or PCMCIA storage device with a passive adapter, a conversion card 4 or with a reader, or attached to other types of ports such as USB or FireWire. As some newer card types are smaller, they can be used directly in a CF card slot with an adapter. Formats that can be used this way include SD/MMC, Memory Stick Duo, xD-Picture Card in a Type I slot and SmartMedia in a Type II slot. Some multi-card readers use CF for I/O as well.

Another standard of interfaces originally designed for laptop computers is PC Card. It is a configuration for computer parallel communication peripheral interface. Originally introduced as PCMCIA, the PC Card standard as well as its successors like CardBus were defined and developed by the Personal Computer Memory Card International Association (PCMCIA).

PCMCIA was originally designed as a standard for memory-expansion cards for computer storage. The existence of a usable general standard for notebook and computer peripherals led to many kinds of devices being made available based on its configurability, including network cards, modems, hard disks and data loading devices. CompactFlash is a smaller dimensioned 50 pin subset of the 68 pin PC Card interface.

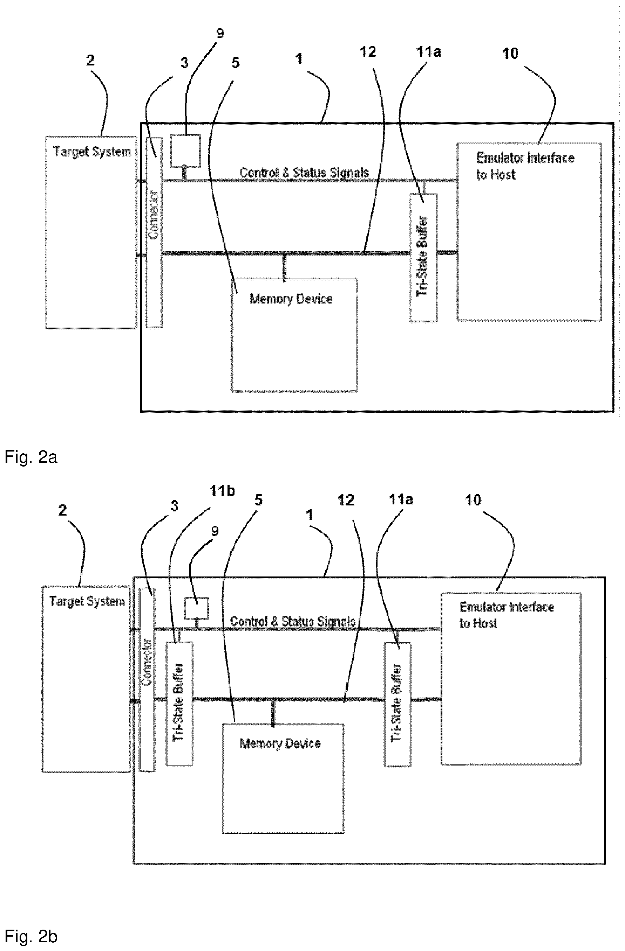

A three-state bus is a computer bus connected to multiple tri-state output devices, only one of which can be enabled at any point to avoid bus contention. This scheme allows for the same bus to be shared among multiple devices. The three-state buffer 11a and 11b as shown in the embodiments of **Fig. 2a** and **Fig. 2b** are used to enable multiple devices, i.e. the system 2, the data loading device 1 and the host 8 to communicate on a data bus 12 in a controlled way.

The data loading device 1 comprises a tri-state buffer 11a located in the connection between the memory device 5 and the interface 10 to the host computer 8 to control access to the memory. In the embodiment of **Fig. 2b** the control mechanism comprises as well a tri-state buffer 11b which is located in the connection between the memory device 5 and the interface 3 to the system 2 to control access to the memory.

The data transfer is processed in the following way according to the embodiments of **Fig. 2a** and **Fig. 2b****:** The data loading device (emulator) 1 is first connected to the data loader computer 8 via USB 7, and the user selects files to be loaded. These are transferred to the flash memory card 5 in the emulator 1.

When this task is completed, the user plugs the emulator 1 into the target system 2. The system 2 detects that the emulator 1 has been inserted by monitoring two card detect pins, which are grounded on the emulator 1. The emulator 1 detects that the card has been inserted, by monitoring the power input from the system. When this occurs, the tristate buffer 11a connecting the memory device 5 to the emulator host interface 10 is tri-stated so that the system 2 can access the memory in the normal way.

However, for train systems 2, it is required that the emulator should remain within the target system 2 at all times and that data loading will be triggered at night when the trains are within their depot and unpowered. For this system to function, the additional tristate buffer 11b is needed between the memory device (CF Card) 5 and the target connector 3.

The second buffer 11b is needed since it is not known how connection to the target system 2 behaves when the target is unpowered. For this system to work, we again monitor the power from the target to determine to control access to the memory device 5.

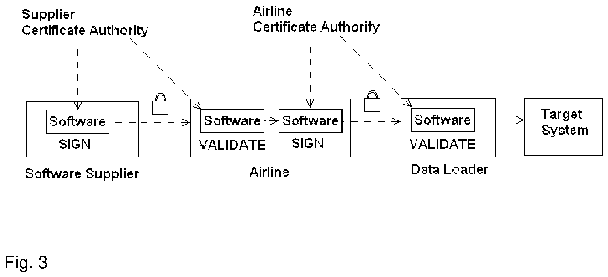

The chart on Fig. 3 shows exemplary the end-to-end distribution of software parts related to the operation and maintenance of an aircraft and the related eco system. Parts of the mentioned software is entered to the aircraft system by using the data loading device 1.

Definitions and abbreviations used:
- ARINC: Aeronautical Radio, Inc.
- Digital Signature: A digital signature is a value computed with a cryptographic algorithm and appended to a data object in such a way that any recipient of the data can use the signature to verify the data's origin and integrity
- PKI: PKI stands for Public Key Infrastructure. This is an architecture used to validate the identities of people, web sites, computer programs, etc., on the internet. A PKI consists of all resources needed to create, manage, distribute, use, store, and revoke digital certificates. These resources include procedures, policies software, hardware, and people that constitute a PKI.
- PKI, trusted third party: A trusted third party, referred to as a Certificate Authority (CA), issues Digital Certificates to applicants. A Registration Authority (RA) binds public keys with their respective user identity. The RA may be part of, or separate from, the CA. Upon request, the RA/CA issues public private key pairs used for encryption as part of a digital certificate. The digital certificate is attached to the data package to be distributed. When one receives the encrypted data, they must be assured that the identities and keys are valid and trustworthy. This is why a trusted 3rd party organization is used to verify the digital certificate for proper identification, expiration, and revocation upon receipt of data.
- PKI services: PKI services can also be used to apply digital signatures for distribution of data that is transported by media (disks, FLASH memory devices, etc.) instead of via a network.
- Compact Flash: Flash memory mass storage device specified by the Compact-Flash Association
- PCMCIA ATA: Flash memory mass storage device conforming to a supplemental PCMCIA-ATA standard of the Personal Computer Memory Card Association
- Loadable Software Part: Software or data that is intended for transfer to its target system without physically altering the hardware and needs to be formally referenced independently from any other part (hardware or software) by airline, aircraft, or other systems manufacturer's processes.

### List of References

- 1: data loading device
- 2: aircraft, train or machine system
- 3: interface tot he system
- 4: conversion card
- 5: flash memory card
- 6: controller
- 7: connection
- 8: portable computer
- 9: control mechanism
- 10: interface tot he host
- 11a, 11b: tristate buffer
- 12: bus

## Claims

1. Data loading device for loading software into aircraft and other vehicle and machine systems (2), wherein the data loading device (1) comprises an interface (3) compatible with a memory card standard, a memory device (5), a controller (6) and a connection (7) to a host computer (8), **characterised in that**
• the interface (3) has a control mechanism (9) which allows access to the memory device (5), when connected to an external data terminal of a system (2) and
• the memory device (5) is also accessible by the computer (8) via the connection (7) which is connected to the controller (6).

2. Data loading device according to claim 1, **characterised in that** the memory device (5) is a flash memory card, a compact flash card or a PC card.

3. Data loading device according to claim 1 or 2, **characterised in that** the data loading device (1) comprises a conversion card (4) with two interfaces providing conversion between a memory device (5) on the data loading device (1) side and PCMCIA ATA connection type on the systems (2) side respectively.

4. Data loading device according to any of the proceeding claims, **characterised in that** the data loading device (1) comprising of a control mechanism (9) and a tri-state buffer (11a) to control access between the memory device (5) and the interface (10) to the host (8).

5. Data loading device according to any of the proceeding claims, **characterised in that** the data loading device (1) comprising of a control mechanism (9) and a tri-state buffer (11b) which controls access to the memory device (5) and the interface (3) to the system (2).

6. Data loading device according to any of the proceeding claims, **characterised in that** the data loading device (1) provides a function to detect the connection with the system (2) by monitoring signals and/or power inputs from the system (2).

7. Data loading method with a data loading device (1) according to any of the proceeding claims, **characterised by** the following method steps:
• data for transfer made available on the computer (8),
• security check of the data is performed,
• copying of the data of the computer (8) to the memory device (5), before the data loading device (1) is connected to the system (2),
• connecting the data loading device (1) to the system (2),
• system (2) reads the data from the memory device (5).

8. Data loading method according to claim 7, **characterised in that** the data from the memory device (5) will be erased when the data loading device (1) is disconnected from the system (2).

9. Data loading method with a data loading device (1) according to any of the claims 1 to 6, **characterised by** the following method steps:
• data for transfer made available on the computer (8),
• security check of the data is performed,
• while the data loading device (1) is connected to the system (2), access to the memory device (5) is isolated from the system (2) by disabling the tri-state buffer (11b).
• while the data loading device (1) is connected to the system (2), access to the memory device (5) is accessible to the computer (8) via the interface (10) by enabling the tri-state buffer (11a).
• copying of the data of the computer (8) to the memory device (5), while the data loading device (1) is connected to the system (2),
• while the data loading device (1) is connected to the system (2), the memory device (5) is accessible to the system (2) by disabling the tri-state buffer (11a) and enabling tri-state buffer (11b).
• system (2) reads the data from the memory device (5) as required
• optionally the data is erased from the memory device (5) when the data loading device (1) is disconnected from the system (2) or when the system (2) is inoperative.

10. Data loading method according to any of the claims 7 to 9, where the data transfer process is performed in reverse, so that data is transferred from system (2) to the computer (8).

11. Data down loading method with a data loading device (1) according to any of the claims 1 to 6, **characterised by** the following method steps:
• while the data loading device (1) is connected to the system (2), system (2) writes data to memory device (5),
• while the data loading device (1) is connected to the system (2), and the computer (8) is connected to the data loading device (1), the memory device (5) is isolated from the system (2) by disabling the tri-state buffer (11b), while the memory device (5) is made accessible to the computer (8), by enabling the tri-state buffer (11a),
• computer (8) reads the data from the memory device (5),
• while the data loading device (1) is connected to the system (2), access to the memory device (5) is accessible to the system (2) by disabling the tri-state buffer (11a) and enabling tri-state buffer (11b).

12. Data loading method according to claim 11, where the data from the memory device (5) will be erased after it has been copied to the computer (8).

13. Data loading method according to any of the claims 7 to 12, **characterised in that** a security check is performed by checking a security signature.
